# FASCICULE DE BREVET EUROPEEN

(11) **EP 3 634 116 B1**
(45) Date de publication et mention de la délivrance du brevet: **17.07.2024**
(21) Numéro de dépôt: 17722104.1
(22) Date de dépôt: 14.04.2017
(51) Int. Cl.: A01K 1/00, F24D 5/12, F24F 12/00

(54) **CHAUFFAGE DE BÂTIMENT D'ÉLEVAGE AVEC UNE POMPE À CHALEUR**
HEIZSYSTEM FÜR EIN LANDWIRTSCHAFTSGEBÄUDE MIT EINER WÄRMEPUMPE
HEATING SYSTEM FOR A HUSBANDRY BUILDING, COMPRISING A HEAT PUMP

(30) Priorité: 18.04.2016 FR 1653413
(43) Date de publication de la demande: 15.04.2020
(73) Titulaire: Calopor, 29860 Bourg Blanc (FR)
(72) Inventeur: MARHADOUR, David, 29860 Bourgblanc (FR)
(74) Mandataire: Derriennic, Tangui Jean
(86) Numéro de dépôt international: PCT/FR2017/050908
(87) Numéro de publication internationale: WO 2017/182745

(56) Documents cités:
- WO-A1-2009/095232
- DE-A1- 2 712 649
- FR-A1- 3 014 172
- US-B1- 6 374 623

## Description

La présente invention est du domaine des dispositifs de chauffage pour bâtiment d'élevage, et s'adresse en particulier aux élevages porcins.

Etant donné l'augmentation sans cesse croissante des coûts liés au chauffage, les éleveurs cherchent à optimiser leur équipement. Une des solutions est d'utiliser des échangeurs de chaleur permettant de ventiler et de renouveler l'air d'un bâtiment.

Une des solutions les plus simples consiste à remplacer l'air en mettant en oeuvre un échangeur air/air. Le principe d'un tel échangeur de chaleur repose sur le transfert de calories par conduction et convection. L'air chaud vicié extrait du bâtiment et l'air propre extérieur traversent l'échangeur en flux croisé sans qu'il n'existe un mélange des deux airs. Ces échangeurs de chaleur permettent d'économiser de l'énergie du fait du réchauffement de l'air propre par l'air chaud extrait. Un tel système est décrit dans la demande FR 2 964 448.

Pour minimiser encore les déperditions d'énergie, il est connu de coupler les échangeurs de chaleur à des pompes à chaleur (PAC). Dans le cadre des installations pour l'élevage porcin, les PAC sont couplées à un échangeur air/eau lequel consiste en un laveur de l'air chaud vicié issue de l'enceinte dans laquelle sont élevés les porcs. Un tel laveur d'air est un circuit fermé formé par un bassin de rétention couplé à un circuit de pompage qui prélève l'eau du bassin pour la pulvériser en fines gouttelettes dans de l'air chaud vicié pour éliminer les substances corrosives qu'il contient, telles que l'ammoniac, qui peuvent endommager les infrastructures. Le circuit d'eau de l'échangeur air/eau peut soit être traversé directement par l'eau de lavage, soit consister en un serpentin rempli de liquide (par exemple de l'eau, ou un mélange eau-glycol) qui trempe dans le bassin de lavage de l'air vicié. Ce principe de récupération de chaleur sur laveur d'air permet de valoriser une source chaude pour améliorer le coefficient de performance (COP) de la PAC. L'inconvénient de ces systèmes de PAC couplés avec des laveurs d'air est un encrassement important qui requiert une maintenance difficile à mettre en oeuvre.

Le document DE 2712649 A1 présente une solution présentant les caractéristiques du préambule de la revendication indépendante 1.

La présente invention vise à pallier les inconvénients de l'art antérieur, et concerne à cet effet, selon un aspect, un dispositif de chauffage d'un bâtiment pour le chauffage d'une enceinte d'élevage, destiné en particulier pour l'élevage des porcs, comprenant :
- au moins une canalisation primaire d'amenée d'air extérieur au bâtiment prévue pour déboucher dans l'enceinte d'élevage ;
- au moins une canalisation d'évacuation d'air vicié issu de l'enceinte d'élevage ; et
- au moins une pompe à chaleur intégrant un évaporateur et un condensateur, et configurée d'une part pour récupérer en partie l'énergie calorifique de l'air chaud vicié dans son évaporateur, et d'autre part pour que les calories produites par son condensateur chauffent les canalisations primaires d'air propre extérieur,
caractérisé en ce que le dispositif comprend au moins une canalisation secondaire d'amené d'air extérieur, d'une part, contenant un section adaptée pour transférer des calories à l'évaporateur de ladite pompe, et d'autre part positionnée de sorte que l'air chaud vicié est soufflé au contact desdites canalisations secondaires. La face externe des canalisations secondaires offrent une surface pour la condensation qui permet l'élimination de l'ammoniac qui est évacué dilué dans le liquide de condensation sous forme de fines gouttelettes.

Le dispositif comporte avantageusement un compartiment d'évacuation intégrant au moins une partie des canalisations secondaires et dans lequel débouchent les canalisations d'évacuation d'air vicié. Les canalisations d'évacuation d'air vicié comprennent avantageusement un aérateur qui débouche dans le compartiment d'évacuation.

Les inventeurs ont mis en évidence de manière totalement inattendue qu'il n'était pas nécessaire de mettre en place une unité de lavage de l'air vicié. En outre, un tel dispositif est facile à intégrer dans les installations d'élevage existantes et est d'une maintenance très aisée.

Avantageusement, les canalisations secondaires sont fixées sur le plafond dudit compartiment d'évacuation. Grâce à ce positionnement les particules en provenance des canalisations d'évacuation d'air vicié tombent sur le sol à distance des canalisations secondaires et peuvent être éliminée de manière gravitaire sans endommager les canalisations secondaire.

Avantageusement, les canalisations secondaires d'amenée d'air comprennent un réseau d'au moins deux tubes métalliques parallèles de 0.3 à 1.5 cm de diamètre interne et la distante entre deux tubes contigus est de 7 à 15 cm. Une telle configuration permet un gain optimal en termes d'échange de chaleur.

Avantageusement, les canalisations secondaires d'amenée d'air sont recouvertes d'une gaine en plastique, tel que du Polyéthylène (PE), de préférence de 0.5 à 1 cm d'épaisseur. Une telle canalisation secondaire fonctionne comme un récupérateur de chaleur hydrofuge pour une meilleure élimination du liquide de condensation qui doit s'écouler depuis la surface externe de la canalisation. De préférence, la gaine est annelée. Une telle gaine, aussi bien de par le matériau qui la compose que de par sa morphologie, permet d'éviter la dégradation des canalisations par l'air vicié en provenance de l'enceinte d'élevage qui peut être saturé en ammoniac.

De préférence, le dispositif de chauffage selon l'invention comprend au moins deux pompes à chaleur positionnées en série. La présence de pompe à chaleur placé en série permet d'augmenter le COD.

Avantageusement, le dispositif comprend au moins une canalisation d'eau chaude contenant une première section configurée pour recevoir de l'énergie calorifique du condensateur de la pompe à chaleur et une deuxième section configurée pour transférer directement de l'énergie calorifique aux canalisations primaires d'air propre extérieur. Les canalisations d'eau chaudes transfèrent directement la chaleur aux canalisations primaires, c'est-à-dire que ces deux catégories de canalisations sont mises au contact pour un transfert de chaleur par conduction ou bien elles sont toutes deux intégrées dans un même espace, de préférence les combles du bâtiment d'élevage, pour une montée en température par confinement.

La présente invention concerne aussi une installation d'élevage, en particulier destinée à l'élevage porcin, comprenant un bâtiment d'élevage et un dispositif de chauffage tel que présenté précédemment dans le cadre de l'invention intégré dans ledit bâtiment, le bâtiment comprenant :
- une enceinte d'élevage prévue pour l'élevage de porc dans laquelle débouchent les canalisations primaires d'air propre extérieur ;
- un étage inférieur positionné en sous-sol de l'enceinte d'élevage et comprenant ledit compartiment d'évacuation ;
- éventuellement un local technique intégrant ladite pompe à chaleur ;
- un étage supérieur positionné au dessus de l'enceinte d'élevage comprenant des combles du bâtiment qui intègrent au moins en partie les canalisations primaires d'air propre extérieur, dans lequel les combles sont configurés pour récupérer les calories produites par le condensateur de ladite pompe à chaleur et les transmettre aux canalisations primaires d'air propre extérieur qui débouchent dans ladite enceinte d'élevage.

Avantageusement, les susdites canalisations d'eau chaude chauffées par la pompe à chaleur traversent les combles. Le chauffage par les combles est particulièrement avantageux car il offre une réserve d'air chaud facile à mettre en oeuvre, et un confinement de l'air particulièrement approprié pour l'utilisation recherchée.

Avantageusement, au moins une parois des combles comporte au moins un aérateur prévu pour insuffler de l'air depuis l'extérieur et le sol des combles, qui est également le plafond de l'enceinte d'élevage, est traversé de part en part par un ensemble d'orifices tubulaires d'aération. Cette configuration des combles permet de générer un flux d'air froid complémentaire, en complément du flux d'air chaud primaire soufflé par les canalisations primaire d'air propre extérieur qui débouchent dans ladite enceinte d'élevage.

De préférence, chaque canalisation primaire d'air propre extérieur débouche par le dessus au milieu d'une unité d'élevage. Pour une diffusion horizontale optimale au niveau du plafond de l'enceinte d'élevage chaque canalisation primaire d'air propre extérieur comporte un plafonnier multicône par lequel elles débouchent dans ladite enceinte. Une telle configuration avec à la fois le flux d'air froid en provenance des combles soufflé par le plafond et le flux d'air chaud diffusé horizontalement de manière centré au dessus de chaque unité d'élevage entraîne des mouvements d'air par convection optimaux avec une répartition de la chaleur et de l'aération idéale pour un confort et une santé améliorés des animaux.

De manière alternative, l'invention concerne une installation d'élevage comportant un moyen de chauffage de l'art antérieur, par exemple une chaudière telle qu'une chaudière à bois, au moins un échangeur d'air ou au moins un système intégrant un échangeur d'air et une pompe à chaleur, et un étage supérieur tel que celui décrit précédemment dans le cadre de l'invention comprenant des combles configurées pour récupérer les calories dudit moyen de chauffage. Toutes les combinaisons entre ces moyens de chauffage alternatifs avec les différentes configurations de l'étage supérieur décrites précédemment sont également possibles, comme notamment le recours à utilisation de plafonniers multicônes centrés au dessus des unités d'élevage par lequel débouchent les canalisations primaires dans l'enceinte d'élevage. Les éléments tronconiques du plafonnier multicônes, également qualifié de diffuseur à cônes, sont avantageusement de section rectangulaire pour une diffusion optimale dans quatre directions sur la surface du plafond. Des exemples de tels diffuseurs sont décrit dans la demande US 4 154 149.

La description détaillée qui suit présente des modes de réalisation de la présente invention, uniquement donnés à titre illustratif et qui ne doivent nullement être interprétés comme limitatifs, et leurs figures annexées parmi lesquelles :
- la figure 1 représente une vue en perspective d'une installation selon l'invention ;
- la figure 2 représente une vue de dessous d'un plafonnier multicônes positionné sur le plafond d'une enceinte d'élevage ; et
- la figure 3 représente une vue schématique en coupe d'une unité d'élevage vue en coupe avec les mouvements de déplacement de l'air dans l'enceinte d'élevage matérialisés par des flèches.

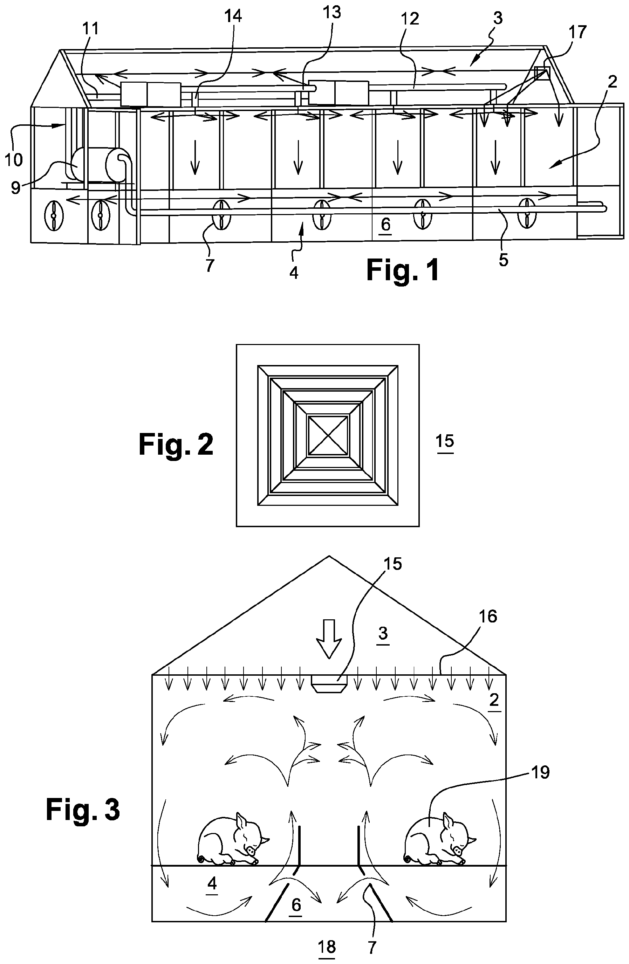

La figure 1 montre un exemple particulier de réalisation d'une installation d'élevage 1 selon l'invention composée d'une enceinte d'élevage 2 destinée à un élevage porcin. L'enceinte d'élevage 2 est positionnée sous un étage supérieur 3 de l'installation d'élevage 1 qui est composé de combles. Un étage inférieur 4 est positionné en sous-sol de l'enceinte d'élevage 2. L'étage inférieur 4 est traversé par des canalisations secondaires d'amenées d'air extérieur 5 dans un compartiment d'évacuation 6, lequel compartiment d'évacuation 6 est percé par des bouches enveloppant des aérateurs d'évacuation 7 par lesquels débouchent des canalisations d'évacuation d'air vicié, et chaud, issu de l'enceinte d'élevage 2. Les aérateurs d'évacuation 7 intègrent au moins une hélice motorisée et dont l'actionnement des pâles entraîne une circulation d'air forcée du haut vers le bas de l'installation d'élevage 1. Selon un mode de réalisation préféré, le compartiment d'évacuation 6 est la gaine de ventilation par lesquels est évacué l'air vicié.

Les canalisations secondaires d'amenées d'air extérieur 5 communiquent avec l'évaporateur d'une pompe à chaleur (PAC) 9 positionné au niveau de l'enceinte d'élevage 2, selon un mode préféré une section des canalisations secondaires d'amenées d'air extérieur 5 comporte un serpentin qui est entrelacé sur un serpentin du vase de l'évaporateur de la PAC. L'air chaud vicié réchauffe les canalisations secondaires d'amenées d'air extérieur 5, lesquelles canalisations secondaires transfèrent à leur tour de l'énergie calorifique à l'évaporateur de la PAC.

La PAC 9 comporte un condensateur intégrant un serpentin entrelacé sur un serpentin d'une canalisation d'eau chaude 10 qui constitue de la sorte une première section configurée pour recevoir de l'énergie calorifique du condensateur. La canalisation d'eau chaude 10 comporte également une deuxième section 11 positionnée dans les combles et configurée pour transférer directement de l'énergie calorifique à des canalisations primaires d'amenée air propre extérieur 12. Les canalisations primaires d'amenée d'air propre extérieur 12 comportent des orifices d'entrée d'air 13 qui communiquent avec l'intérieur des combles, l'air pénètre dans les canalisations primaires 12 par lesdits orifices d'entrée d'air 13 et est ensuite chauffé comme expliqué précédemment. Les canalisations primaires d'amenée d'air propre extérieur 12 débouchent par le plafond de l'enceinte d'élevage par un canal d'admission 14 sur un diffuseur à cônes 15 (figure 2). Le diffuseur 15 est positionné au dessus d'une unité d'élevage et au centre de la surface du plafond qui la ferme par le haut.

Le diffuseur à cônes 15 est en plastique PVC, comporte quatre niveaux d'assiettes de tronc de pyramide à section carré et présente un gradient d'ouverture entre les assiettes qui décroit du bord vers le centre du diffuseur. Cette géométrie du diffuseur à cônes 15 permet une diffusion de l'air chaud horizontale parfaitement homogène dans quatre directions principales. En outre, cette géométrie permet d'assurer une reprise d'air au centre du diffuseur pour optimiser la circulation d'air chaud et favoriser la convection dans tout l'espace.

Le plafond de l'enceinte d'élevage 2 est percé par un réseau d'orifices tubulaires d'aération 16 qui permettent une amenée d'air directement depuis les combles.

Les combles intègrent également un aérateur d'injection 17 fixé sur un pignon du bâtiment, cet aérateur 17 injecte de l'air frais depuis l'extérieur qui va soit diffuser directement dans l'enceinte d'élevage 2 par les orifices tubulaires d'aération 16, soit être piégé dans les canalisations secondaire d'amené d'air extérieur 5 pour diffuser dans l'enceinte d'élevage 2 après avoir été réchauffé par l'actionnement de la PAC 9.

La figure 3 représente une unité d'élevage 18 correspondant à une coupe du bâtiment d'élevage. L'air chaud insufflé depuis les canalisations primaires d'amenée d'air propre extérieur 12 subit des mouvements de convection entretenus par les diffuseurs à cônes 15. En outre, de l'air frais est ventilé en permanence par les orifices tubulaires d'aération 16 pour une meilleures qualité de l'air ambiant dans les unités et améliorer les conditions sanitaire des animaux 19.

## Revendications

1. Dispositif de chauffage d'un bâtiment pour le chauffage d'une enceinte (2) d'élevage de porcs, comprenant :
au moins une canalisation primaire d'amenée d'air extérieur (12) au bâtiment prévue pour déboucher dans l'enceinte d'élevage (2) ;
au moins une canalisation d'évacuation d'air vicié issu de l'enceinte d'élevage ; et
au moins une pompe à chaleur (9) intégrant un évaporateur et un condensateur, et configurée d'une part pour récupérer en partie l'énergie calorifique de l'air chaud vicié dans son évaporateur,
et d'autre part pour que les calories produites par son condensateur chauffent les canalisations primaires d'air propre extérieur (12),
**caractérisé en ce que** le dispositif comprend au moins une canalisation secondaire d'amené d'air extérieur (5), d'une part, contenant une section adaptée pour transférer des calories à l'évaporateur de ladite pompe, et est d'autre part positionnée de sorte que l'air chaud vicié est soufflé au contact desdites canalisations secondaires (5).

2. Dispositif de chauffage selon la revendication 1 , dans lequel le dispositif de chauffage comprend un compartiment d'évacuation (6) intégrant au moins une partie desdites canalisations secondaires d'amenée d'air (5) et dans lequel débouchent les canalisations d'évacuation d'air vicié.

3. Dispositif de chauffage selon la revendication 2, dans lequel les canalisations secondaires d'amenée d'air (5) sont fixées sur le plafond dudit compartiment d'évacuation (6).

4. Dispositif de chauffage selon l'une des revendications 1 à 3, dans lequel les canalisations secondaires d'amenée d'air (5) comprennent un réseau d'au moins deux tubes métalliques parallèles de 0.3 à 1 .5 cm de diamètre interne et la distante entre deux tubes contigus est de 7 à 1 5 cm.

5. Dispositif de chauffage selon l'une des revendications 1 à 4, dans lequel les canalisations secondaires d'amenée d'air (5) sont recouvertes d'une gaine en plastique.

6. Dispositif de chauffage selon l'une des revendications 1 à 5, dans lequel le dispositif comprend au moins deux pompes à chaleur (9) positionnées en série.

7. Dispositif de chauffage selon l'une des revendications 1 à 6, dans lequel le dispositif comprend au moins une canalisation d'eau chaude (10) contenant une première section configurée pour recevoir de l'énergie calorifique du condensateur de la pompe à chaleur (9) et une deuxième section (11) configurée pour transférer directement de l'énergie calorifique aux canalisations primaires d'air propre extérieur.

8. Installation d'élevage (1 ) comprenant un bâtiment d'élevage et un dispositif de chauffage selon l'une des revendications 2 à 7 intégré dans ledit bâtiment, le bâtiment comprenant :
- une enceinte d'élevage (2) prévue pour l'élevage de porc dans laquelle débouchent les canalisations primaires d'air propre extérieur (12) ;
- un étage inférieur (4) positionné en sous-sol de l'enceinte d'élevage et comprenant ledit compartiment d'évacuation (6) ;
- éventuellement un local technique intégrant ladite pompe à chaleur (9) ;
- un étage supérieur comprenant des combles du bâtiment qui intègrent au moins en partie les canalisations primaires d'air propre extérieur (12), dans lequel les combles sont configurés pour récupérer les calories produites par le condensateur de ladite pompe à chaleur (9) et les transmettre aux canalisations primaires d'air propre extérieur (12).

9. Installation d'élevage (1 ) selon la revendication 8, dans laquelle lesdites canalisations d'eau chaude (10) chauffées par la pompe à chaleur (9) traversent les combles.

10. Installation d'élevage (1 ) selon l'une des revendications 8 ou 9, dans laquelle au moins une parois des combles comporte au moins un aérateur d'injection (17) prévu pour insuffler de l'air depuis l'extérieur et dans laquelle le sol des combles, qui est également le plafond de l'enceinte d'élevage (2), est traversé de part en part par un ensemble d'orifices tubulaires d'aération (16).

## Patentansprüche

1. Heizvorrichtung eines Gebäudes zum Heizen eines Schweinezuchtraumes (2), umfassend:
mindestens eine Hauptleitung zum Zuführen von Außenluft (12) in das Gebäude, die dazu vorgesehen ist, um in den Zuchtraum (2) zu münden;
mindestens eine Abführleitung für aus dem Zuchtraum stammende Abluft; und
mindestens eine Wärmepumpe (9), die einen Verdampfer und einen Kondensator einbindet, und einerseits konfiguriert ist, um teilweise die Wärmeenergie aus der warmen Abluft in ihrem Verdampfer aufzufangen, und andererseits damit die von ihrem Kondensator erzeugten Kalorien die Hauptleitungen für saubere Außenluft (12) erwärmen,
**dadurch gekennzeichnet, dass** die Vorrichtung mindestens eine Nebenleitung zum Zuführen von Außenluft (5) umfasst, die einerseits eine Sektion enthält, die angepasst ist, um Kalorien zum Verdampfer der Pumpe zu übertragen, und andererseits positioniert ist, sodass die warme Abluft in Kontakt mit den Nebenleitungen (5) geblasen wird.

2. Heizvorrichtung nach Anspruch 1, wobei die Heizvorrichtung eine Abführkammer (6) umfasst, welche mindestens einen Teil der Nebenleitungen zum Zuführen von Luft (5) einbindet, und in welche die Abführleitungen für Abluft münden.

3. Heizvorrichtung nach Anspruch 2, wobei die Nebenleitungen zum Zuführen von Luft (5) an der Decke der Abführkammer (6) befestigt sind.

4. Vorrichtung zum Heizen nach einem der Ansprüche 1 bis 3, wobei die Nebenleitungen zum Zuführen von Luft (5) ein Netz mit mindestens zwei parallelen Metallrohren mit einem Innendurchmesser von 0,3 bis 1,5 cm umfassen, und der Abstand zwischen zwei benachbarten Rohren 7 bis 15 cm beträgt.

5. Heizvorrichtung nach einem der Ansprüche 1 bis 4, wobei die Nebenleitungen zum Zuführen von Luft (5) mit einer Hülle aus Kunststoff überzogen sind.

6. Heizvorrichtung nach einem der Ansprüche 1 bis 5, wobei die Vorrichtung mindestens zwei in Reihe positionierte Wärmepumpen (9) umfasst.

7. Heizvorrichtung nach einem der Ansprüche 1 bis 6, wobei die Vorrichtung mindestens eine Warmwasserleitung (10) umfasst, die einen ersten Abschnitt enthält, der konfiguriert ist, um Wärmeenergie aus dem Kondensator der Wärmepumpe (9) aufzunehmen, und einen zweiten Abschnitt (11), der konfiguriert ist, um Wärmeenergie direkt zu den Hauptleitungen für saubere Außenluft zu übertragen.

8. Zuchtanlage (1), welche ein Zuchtgebäude und eine Heizvorrichtung nach einem der Ansprüche 2 bis 7 umfasst, welche in das Gebäude eingebunden ist, wobei das Gebäude umfasst:
- einen Zuchtraum (2), der für die Schweinezucht vorgesehen ist, in welchen die Hauptleitungen für saubere Außenluft (12) münden;
- eine untere Etage (4), die im Untergeschoß des Zuchtraumes positioniert ist und die Abführkammer (6) umfasst;
- eventuell ein Techniklokal, welches die Wärmepumpe (9) einbindet;
- eine obere Etage, die das Dachgeschoß des Gebäudes einbindet, welches mindestens teilweise die Hauptleitungen für saubere Außenluft (12) einbindet, wobei das Dachgeschoß konfiguriert ist, um die vom Kondensator der Wärmepumpe (9) erzeugten Kalorien aufzufangen, und sie zu den Hauptleitungen für saubere Außenluft (12) zu übertragen.

9. Zuchtanlage (1) nach Anspruch 8, wobei die von der Wärmepumpe (9) erwärmten Warmwasserleitungen (10) das Dachgeschoß durchqueren.

10. Zuchtanlage (1) nach einem der Ansprüche 8 oder 9, wobei mindestens eine Wand des Dachgeschoßes mindestens einen Injektionslüfter (17) beinhaltet, der vorgesehen ist, um Luft von außen einzublasen und wobei der Boden des Dachgeschoßes, der auch die Decke des Zuchtraumes (2) ist, von einer Seite zur anderen von einer Reihe von röhrenförmigen Lüftungsöffnungen (16) durchquert wird.

## Claims

1. A device for heating a building for heating a pig rearing enclosure (2), comprising:
at least one primary pipe (12) for supplying external air to the building intended to open into the rearing enclosure (2) ;
at least one pipe for discharging stale air originating from the rearing enclosure; and
at least one heat pump (9) incorporating an evaporator and a condenser, and configured on the one hand to partly recover the heat energy from the stale hot air in its evaporator and, on the other hand, so that the calories produced by its condenser heat up the external clean air primary pipes (12),
**characterised in that** the device comprises at least one external air supply secondary pipe (5), on the one hand, containing a section adapted to transfer calories to the evaporator of said pump and, on the other hand, positioned so that the stale hot air is blown into contact with said secondary pipes (5).

2. The heating device according to claim 1, wherein the heating device comprises a discharge compartment (6) incorporating at least part of the said air supply secondary pipes (5) and into which the stale air discharge pipes open.

3. The heating device according to claim 2, wherein the air supply secondary pipes (5) are fastened to the ceiling of said discharge compartment (6).

4. The heating device according to one of claims 1 to 3, wherein the air supply secondary pipes (5) comprise a network of at least two parallel metal tubes having an inner diameter of 0.3 to 1.5 cm and the distance between two contiguous tubes is from 7 to 15 cm.

5. The heating device according to one of claims 1 to 4, wherein the air supply secondary pipes (5) are covered with a sheath made of plastic.

6. The heating device according to one of claims 1 to 5, wherein the device comprises at least two heat pumps (9) positioned in series.

7. The heating device according to one of claims 1 to 6, wherein the device comprises at least one hot water pipe (10) containing a first section configured to receive heat energy from the condenser of the heat pump (9) and a second section (11) configured to directly transfer heat energy to the external clear air primary pipes.

8. A rearing installation (1) comprising a rearing building and a heating device according to one of claims 2 to 7 integrated into said building, the building comprising:
- a rearing enclosure (2) intended for rearing pigs into which the external clean air primary pipes (12) open;
- a lower floor (4) positioned in the basement of the rearing enclosure and comprising said discharge compartment (6);
- possibly a technical premises incorporating said heat pump (9);
- an upper floor comprising roofspaces of the building which at least partly incorporate the external clean air primary pipes (12), wherein the roofspaces are configured to recover the calories produced by the condenser of said heat pump (9) and transmit them to the external clean air primary pipes (12).

9. The rearing installation (1) according to claim 8, wherein said hot water pipes (10) heated by the heat pump (9) pass through the roofspaces.

10. The rearing installation (1) according to one of claims 8 or 9, wherein at least one wall of the roofspaces includes at least one injection aerator (17) intended to blow air from the outside and wherein the floor of the roofspaces, which is also the ceiling of the rearing enclosure (2), is crossed therethrough by a set of aeration tubular orifices (16).
